# EUROPEAN PATENT SPECIFICATION

(11) **EP 3 132 674 B1**
(45) Date of publication and mention of the grant of the patent: **29.07.2020**
(21) Application number: 16183109.4
(22) Date of filing: 05.08.2016
(51) Int. Cl.: A01F 25/20, A01F 29/00

(54) **APPARATUS AND METHOD FOR SEPARATING FEED FOR LIVESTOCK**
VORRICHTUNG UND VERFAHREN ZUR TRENNUNG VON VIEHFUTTER
APPAREIL ET PROCÉDÉ POUR SÉPARER DES ALIMENTS POUR BÉTAIL

(30) Priority: 12.08.2015 NL 2015297
(43) Date of publication of application: 22.02.2017
(73) Proprietor: Trioliet Holding B.V., 7575 BE Oldenzaal (NL)
(72) Inventor: LIET, Cornelis Hendricus, 7581 TJ Losser (NL)
(74) Representative: De Vries & Metman

(56) References cited:
- WO-A1-2015/016710
- CA-A1- 2 513 197
- DE-A1- 4 006 236
- US-A- 4 258 886
- US-A- 5 099 755

## Description

The invention is related to an apparatus for separating feed for livestock, such as feed from bales or blocks of silage, feed from a silo or other feed for livestock to be separated.

Feed for livestock, in particular forage such as silage may include grass, mixtures of grass and clover, grains such as wheat, barley or mixtures thereof or mixtures of grains with peas or beans. Silage that is compacted in a driving silo or pit and which is separated using a silage block cutter, a silage grab or other suitable device, is usually defined as 'blocks' whereas feed that is compacted in a baling press is usually defined as 'bales'. A layered structure arises upon compacting. Separating feed from a bale or block must be carried out such that the structure of the remaining portion of the block or the bale remains intact and does not loosen or crumble off in order to prevent oxygen from penetrating into the bale causing starting of decay processes.

An apparatus for separating feed for livestock from a stock of feed on a carriage is known from DE 40 06 236, US 4,258,886. The apparatus comprises a rotating rotary cutter blade which can be moved along a cutting face. Another example of such an apparatus is disclosed in WO 2015/016710, which comprises a set of two cutter blades at an angle with each other.

Other examples of feed processing apparatuses use one or more reciprocating knives having double blades having toothed edges which move relative to each other to cut the feed in a hedge trimmer fashion. These cutters are relatively complex, make a lot of noise because of the reciprocating motion and have a more limited economic life span compared to single blade knives.

The fodder to be cut may contain fibrous materials with long stems, such as hay, which may cause substantial frictional resistance. As a result wear of the knives limits their economic lifespan. The object of the present invention is to provide an apparatus and a method for separating feed for livestock, such as for example feed from bales or blocks of silage from a silo or supplied via a supply station, with an increased economic lifespan for the used knifes.

The object of the invention is achieved with an apparatus for separating feed for livestock along a cutting face according to claim 1.

The cutting edges of the cutting teeth may for example be arranged, e.g., in a symmetrical configuration. This way the economic lifespan of the cutters can be doubled.

For some feed types, only a single cutting direction may be used. The cutting unit is moved horizontally from a first side of a bale or block to an opposite side with the knife held in a cutting position, and then returned to the first side holding the knife at a distance from the cutting face in an idle position. When the knife is back into the start position, it is lowered for a next stroke. This way, only one cutting direction is used. The knife can be mounted conversely after wear of the cutting edges at one side of the teeth. After the knife has been turned, the cutting edges of the second side are used with the same cutting direction.

The apparatus comprises a drive which facilitates cutting in two or more cutting directions, e.g., two opposite cutting directions. After wear of the cutting edges in one direction, the cutting direction can be reversed in order to be able to cut with the other cutting edges. This is particularly useful if the knife is a rotary circular knife with cutting teeth which are symmetrical about a radial axis, or if the knife is a toothed band knife.

Alternatively, the cutting direction can be reversed alternatingly during a zigzag cutting path along the cutting face, in particular if the knife comprises one or two rotary knives. The cutting unit may be moved horizontally from a first side of a bale or block to an opposite side with the knife held in a cutting position and cutting in a first direction. When it reaches the opposite side, the cutting unit is lowered and the cutting direction of the knife is reversed. The cutting unit is the returned to the first side, still holding the knife in a cutting position. In that case, each side of the cutting teeth is used half of the cutting time instead of 100% of the cutting time as with prior art systems. In doing so the cutting unit follows a meandering or zigzag pattern along the cutting face. To this end the apparatus may for example comprise a drive for driving the knife selectively in one of two or more cutting directions, e.g. to opposite cutting directions.

Optionally, the knife can comprise a main blade and cutting teeth provided at a cutting edge of the main blade, wherein at least some of the cutting teeth are made of a harder material than the main blade. For instance, the knife may comprise hard metal teeth with two or more cutting edges. The cutting teeth may for example comprise cutting tips or inserts of a hard metal, such as cemented carbide, hardened steel or tempered steel. The main blade may be made of a softer steel.

The knife may for instance include a band knife and/or a rotary cutter blade. In case of a rotary cutter blade the cutting unit may comprise a drive for selectively moving the cutting unit in one at least two opposite directions along the cutting face. These opposite directions are typically substantially horizontal, but may also run in vertical, diagonal or non-linear directions if so desired.

In a specific embodiment the one or more cutter blades may be moved along the cutting face through a guide. If more than one cutter blade is used, the cutter blades may be moved along the guide separately or together as a single cutting unit having a fixed mutual distance. For example, the guide may comprise a frame having a first, substantially horizontal guide, along which the cutter blades are displaceable in horizontal direction, and a second guide along which the cutter blades are moveable upwardly and downwardly. In this way the cutter blades are moveable along the whole cutting face, e.g., along a zigzag cutting path.

The risk of uncontrolled loosening and crumble-off or later falling of feed from the cutting face can be reduced by adapting the guide such that the one or more cutter blades are moved along a cutting face which is inclined backwardly. For example, the cutting face can be angled by 0 - 20 degrees with respect to the vertical, for example 2 - 15 degrees.

In a particular embodiment the apparatus may be provided with at least two cutter blades which extend in a width direction of the cutting face and which are at an angle with respect to each other, as seen in side view. Optionally, one of the cutter blades has an end which crosses the plane of the other cutter blade, as seen in side view. Herein, the plane of the cutter blade means the geometric plane through the cutting edge of the cutter blade, which plane is transverse to the thickness direction of the cutter blade. For example, one of the cutter blades may project along an end of the other cutter blade such that the cutter blades are arranged in a T-shape, as seen in side view. It is also possible to arrange the cutter blades such that both cutter blades project with respect to each other, hence being arranged in X-shape, as seen in side view. In a T-shaped arrangement the cutter blades may be placed close to each other in horizontal direction of the cutting face. In particular in the X-shaped arrangement the cutter blades may engage at different points of engagement or locations of engagement at the cutting face. Herein, point of engagement means the location where the corresponding cutter blade cuts in a bale when this is placed in the operating range of the cutter blades.

Due to these features feed can be separated in amounts that can be determined accurately with a smooth cutting face, wherein the feed is discharged immediately after separating, such that the risk of jamming of the cutter blade, accumulation of feed on the cutter blade and spoiling of feed is reduced dramatically.

The two or more cutter blades may include straight cutter blades. In a specific embodiment the cutter blades may include rotary cutter blades. A combination of one or more straight cutter blades with one or more rotary cutter blades may be used, as well.

In order to reduce contact between the upper cutter blade and the cutting face further the upper cutter blade may be arranged at an angle ω with respect to the cutting face, as seen in top view. This angle, too, may be an angle of for example 0 - 12 degrees, for example 3 < ω < 9 degrees.

Both cutter blades may be driven separately or driven by means of the same drive means, for example with an adjustable rotational speed. The second cutter blade may be rotated faster, more slowly or at the same speed as the first cutter blade. The rotational speeds of the circular cutter blades relative to each other may be changed depending on the moving direction. The rotary cutter blades may rotate in opposite directions such that resulting reaction forces are neutralized.

In an embodiment the first cutter blade defines an acute angle β with respect to the cutting face, whereas the second cutter blade defines an obtuse angle δ with respect to a portion of the cutting face extending above the rotary cutter blade. Hence, the first cutter blade extends more or less upright along the cutting face having a substantially lying rotating shaft, whereas the second rotary cutter blade is arranged substantially lying having a rotating shaft which extends substantially upright. De mentioned acute angle may be β < 6 degrees, for example about 3 degrees.

The second cutter blade may be horizontal, for example, or define an angle γ with respect to the horizontal, for example, wherein the angle may have a value of for example 20 < γ < 30 degrees.

More specifically the cutter blades may be arranged such that a lower portion of the first cutter blade crosses a front portion of the second cutter blade, as seen in side view. For example, the front portion of the second cutter blade may project behind the first cutter blade across a distance of 0 < L1 < 5 cm, for example 1 < L1 < 2 cm, as seen in side view. The lower portion of the first cutter blade may project below the second cutter blade across a distance of 0 < L2 < 5 cm, for example 1 < L2 < 2 cm, as seen in side view. The crossing cuts of both cutter blades separate a strip of feed which subsequently can be loosened further, if necessary, and be discharged.

If both cutter blades are arranged as rotary cutter blades the shortest distance between the outer circumferences of both cutter blades may be at least 1 cm, for example, or more if desired.

Both rotary cutter blades may have about the same diameter. In an alternative embodiment both rotary cutter blades may have different sizes. For example, the lower rotary cutter blade may be larger than the upper rotary cutter blade, or vice versa.

For further guiding separated feed the cutter blades, particularly the upper cutter blade which is moved along the cutting face, may be provided with a guide member such as a flat disc or plate for retaining separated feed so as to prevent feed from being thrown away. For example, the disc or plate may be mounted on a drive shaft of the cutter blade and may be substantially parallel to the cutter blade, for example co-axial. The disc may be disposed at a distance from the cutter blade, which distance equals the thickness of the strips of feed to be separated. For example, such a disc may be mounted to a drive shaft of the upper cutter blade which is arranged as a rotary cutter blade. The disc may be circular or may have an alternative suitable circumference, such as square or polygonal. The disc may rotate together with the rotary cutter blade or being static or driven separately, for example in the same or in opposite direction of the rotary cutter blade, for example at the same speed of rotation or more slowly or faster.

In a specific embodiment the cutter blades include rotary cutter blades having ends which cross each other in a point at the cutting face, as seen in side view, having an upper rotary cutter blade which is moveable substantially along the cutting face and a lower rotary cutter blade, wherein the upper rotary cutter blade is mounted to a drive shaft which is provided with a circular or alternatively shaped disc which is substantially parallel and possibly co-axial to the upper cutter blade. The second, lower rotary cutter blade may be mounted to a drive shaft which may be provided with a drum including vanes, for example.

In order to reduce the risk of jamming of the loosened feed at the toothing the upper rotary cutter blade may be arranged as a rotary blade knife having relatively short cutting teeth. The cutting teeth may project 8 mm or less with respect to the inner diameter of the toothing. The crest of the cutting tooth cuts and pulls the feed to be cut. Short cutting teeth cause a limited total pulling force, such that the knife does no longer jam rapidly.

When the one or more cutter blades have been moved along a cutting face and have separated the feed from the cutting face the cutting unit can be moved in the direction of the cutting face in order to be moved again along another cutting face. The apparatus can be provided with wheels or being mounted to a rail guide, such as an upper guide. It is also possible that the feed is moved in the direction of the cutting unit, for example by means of a supply station having a conveyor belt on which blocks or bales of feed are placed.

The separated feed may be transported to a stable or alternative feed location, for example by means of a controlled or self-propelled mixing carriage. The apparatus may be part of a controlled or self-propelled mixing carriage, for example.

The apparatus according to the invention may also be provided with a discharge conveyor for discharging separated feed to a mixing tank or mixing robot. The mixing tank or mixing robot and/or the discharge conveyor may be provided with weighing means for weighing separated feed. The apparatus may further be provided with a control unit, for example for controlling the cutter blades and/or the discharge conveyor. The control unit may be programmed such that the cutter blades are de-activated when the weighing means indicate that the amount of separated feed in the mixing tank and/or the amount of separated feed on the discharge conveyor equals a predetermined desired value, for example as one component out of a feed composition containing a plurality of components. The apparatus may comprise a supply station or two or more supply stations for supplying different types of feed to be mixed.

The apparatus may further comprise a control unit configured to drive the cutting unit in a zigzag pattern along the cutting face. The control unit may for example be configured to reverse the cutting direction of the cutting blade(s) when the moving direction of the cutting unit is reversed.

One not claimed embodiment consists in an apparatus for separating feed for livestock along a cutting face, the apparatus being provided with a cutting unit comprising at least one knife and at least one fluid supply with at least one nozzle directed to a cutting edge of the knife. This allows wetting of the knife during cutting or thereafter. The fluid will typically be water, optionally with suitable additives. This helps to reduce wear. The water may for example be sprayed, e.g., atomized, onto the knife, e.g. at the point where it follows the cutting face. The water can be sprayed, e.g., atomized, after starting the cutting, e.g., for about 0,5 - 30 seconds. Amounts of 10 - 250 cl were found to be sufficient to reduce wear. Other amounts can also be used, if so desired. Optionally, the water can be sprayed intermittently. The water also helps to clean the knife and to prevent caking of separated material, in particular due to the high sugar content of most feed types. Such wetting nozzles can be used regardless whether or not the knife comprises cutting teeth with two or more cutting edges. It can for instance also be used with reciprocating knives and with any type of livestock feed processing apparatus, such as a wheeled apparatus or the like. Optionally, the water may contain additives, e.g., lubricants, anti-corrosion agents, flavouring agents, nutrients, anti-freezing agents, agents to improve solubility of sugars or other components and/or any other type of functional additive.

With or without additives the water prevents or limits dust production and spreading of dust. The water may also reduce the risk of sparks, e.g., when the knife hits a flint stone.

The invention also relates to a method of separating feed for livestock, wherein a cutting unit comprising a knife is alternatingly moved in two opposite cutting directions along a cutting face. The cutting unit is for example moved alternatingly in two opposite directions following a zigzag pattern along the cutting face. If a rotational cutter blade is used, the rotational cutting direction of the cutter blade may be reversed upon reversal of the direction of the cutting unit.

The invention will be elucidated by means of the drawings, in which some embodiments are shown by way of example.
Fig. 1: shows an embodiment of an apparatus for separating feed for livestock;
Fig. 2: shows a frontal view of a cutting unit of the apparatus of Fig. 1;
Fig. 3: shows a side view of a cutting unit of the apparatus of Fig. 1;
Fig. 4A: shows the crossing ends of the rotary cutter blades of a cutting unit of the apparatus of Fig. 1 in detail;
Fig. 4B: shows an alternative arrangement of the ends of the rotary cutter blades of a cutting unit of the apparatus of Fig. 1;
Fig. 4C: shows a further alternative arrangement of the ends of the rotary cutter blades of a cutting unit of the apparatus of Fig. 1;
Fig. 5: shows a side view of the apparatus of Fig. 1;
Fig. 6: shows a rotary cutter blade of the cutting unit of the apparatus of Fig. 1;
Fig. 7: shows cutting teeth of the rotary cutter blade of Fig. 6 in detail;
Fig. 8: shows a cross-section of a cutting tooth of Fig. 7;
Fig. 9: shows a detail of the rotary cutter blade of Fig. 6;
Fig. 10: shows an alternative embodiment of an apparatus for separating feed for livestock in perspective view;
Fig. 11: shows the apparatus of Figure 10 in side view;
Fig. 12: shows the cutting unit of the apparatus of Figure 10 in more detail;
Fig. 13A-C: shows sections of a knife band of the apparatus of Figure 10.

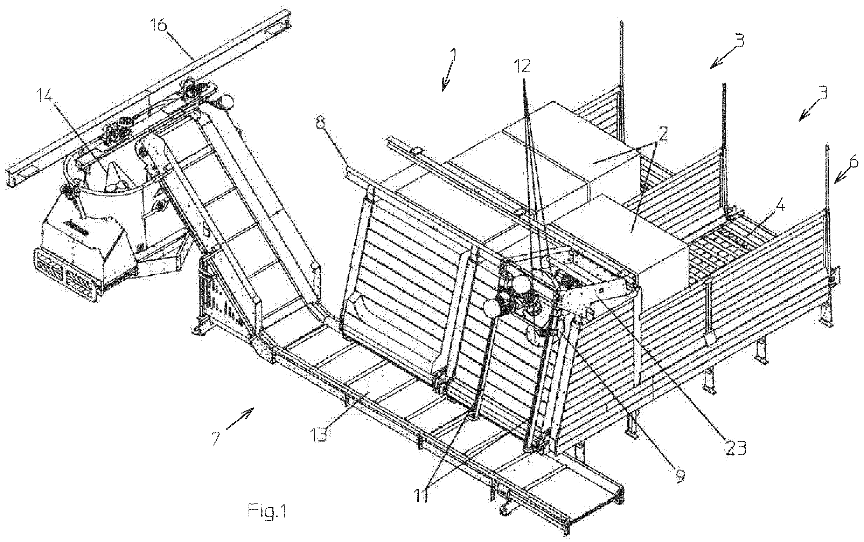

Figure 1 shows an example of an apparatus 1 for separating, processing and mixing of forage, for example bales or blocks of silage 2 or loose forage. The apparatus 1 of Figure 1 comprises a plurality of supply stations 3 which are provided with conveyors 4 on which bales or blocks of feed for livestock 2 to be processed are placed. The bales or blocks 2 are placed at a supply side 6 on the conveyors 4 and subsequently displaced towards a discharge side 7. At the discharge side 7 the apparatus 1 is provided with a horizontal guide 8 along the common width of both supply stations 3. A cutting unit 9 can be moved to and fro along the horizontal guide 8. The cutting unit 9 comprises a vertical second guide 11 and an assembly of two rotary cutter blades 12 which have the same size and which are movable upwardly and downwardly as a whole along the second guide 11, wherein the mutual orientation and position of the rotary cutter blades 12 remain the same. The vertical guide 11 defines an angle with respect to the vertical of about 15 degrees. In that way the rotary cutter blades 12 can be moved along a cutting face of a bale or block 2, which is inclined backwardly, at the discharge side 7 of the corresponding supply station 3.

Separated feed is received on a transverse conveyor 13 which discharges the feed to a mixing robot or mixing tank 14, in which the feed can be mixed with other feed components, for example, for example from blocks or bales 2 of a different supply station 3. In the embodiment as shown the mixing robot 14 is displaceable along a suspended rail 16. The mixing tank or mixing robot 14 may be provided with weighing means, for example.

The apparatus 1 may also have an alternative configuration, for example a configuration having a single supply station or a plurality of supply stations, or a configuration wherein the blocks or bales are not placed on a supply station, but stationary on a flat, solid bottom, such as a floor or a pallet or a similar stationary support means.

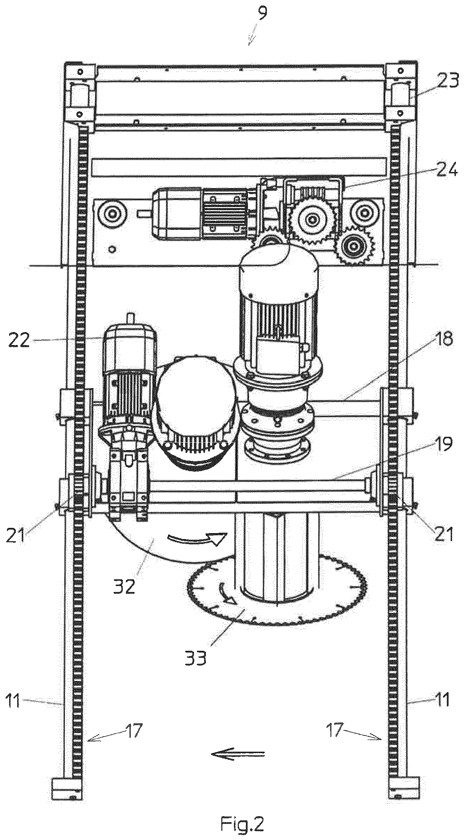

Figure 2 shows a front view of the cutting unit 9. The vertical guide 11 comprises two parallel posts, provided with a toothing 17. Both rotary cutter blades 12 are mounted to a frame 18 with a shaft 19 which is provided with pinions 21 at both ends. The shaft 19 is rotatably driven by an electric motor 22, wherein the pinions 21 are moved upwardly and downwardly along the toothing 17 of the posts 11. The cutting unit 9 further comprises an upper frame 23 including drive means 24 for moving it to and fro along the horizontal guide 8.

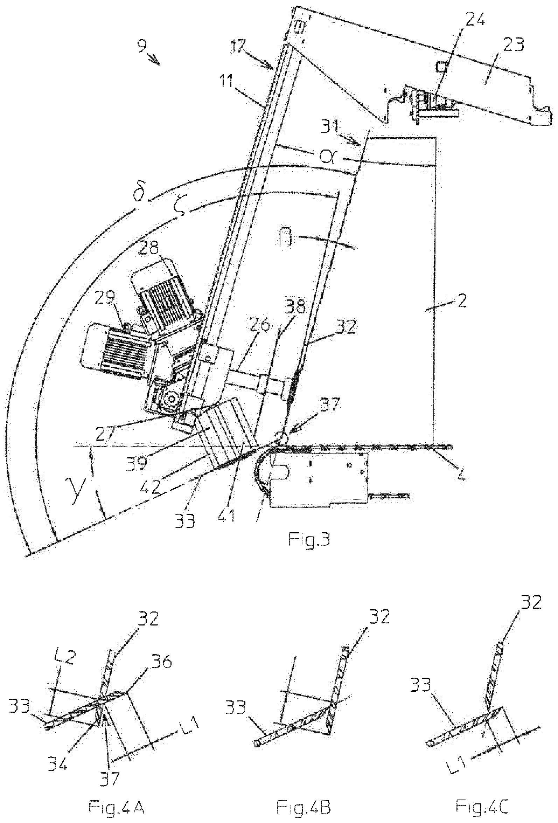

Both rotary cutter blades 12 are mounted to own drive shafts 26, 27, as shown in Figure 3. Each of the drive shafts 26, 27 is driven separately by an electric motor 28, 29.

Figure 3 shows a side view of the cutting unit 9. The vertical guide 11 is such that the rotary cutter blades 32, 33 are moved via the guide 11 along a cutting face 31 of the block 2 which is inclined backwardly. In the embodiment as shown the cutting face 31 is inclined backwardly at an angle α of about 15 degrees.

The rotary cutter blades 32, 33 comprise an upper rotary cutter blade 32, which extends parallel to the cutting face 31, thereby disregarding a clearance angle β, and a lower rotary cutter blade 33. As shown in detail in Figure 4A a lower part 34 of the upper rotary cutter blade 32, as seen in side view, crosses a front part 36 of the second rotary cutter blade 33 in a point 37. During cutting feed this point 37 (which is just a point as seen in side view) is moved along the cutting face 31 of the corresponding bale or block 2. As shown in detail in Figure 4A the front part 36 of the lower rotary cutter blade 33 projects behind the upper rotary cutter blade 32 across a distance L1, while the lower part 34 of the first rotary cutter blade 32 projects below the second rotary cutter blade 33 across a distance L2. In this way it forms an X-shape as a whole. Figs. 4B and 4C show alternative embodiments, wherein both cutter blades 32, 33 form a T-shape. In Figure 4B the lower end of the upper cutter blade 32 projects below the lower cutter blade 33 across a distance L2. In Figure 4C the front end of the lower cutter blade 33 projects behind the upper cutter blade 32 across a distance L1.

Figure 3 further shows how the upper rotary cutter blade 32 defines a small clearance angle β with respect to the cutting face of, for example, about 3 degrees. The lower rotary cutter blade 33 defines an angle γ of about 25 degrees with the horizontal. The angle ς between both rotary cutter blades 32, 33 is 127 degrees as seen in side view in the embodiment as shown.

As shown in Figure 3 the lower rotary cutter blade 33 has a lower point of its track which lies at the level of the conveyor 4 of the supply station 3, such that only a smallest possible amount of remaining feed may accumulate there.

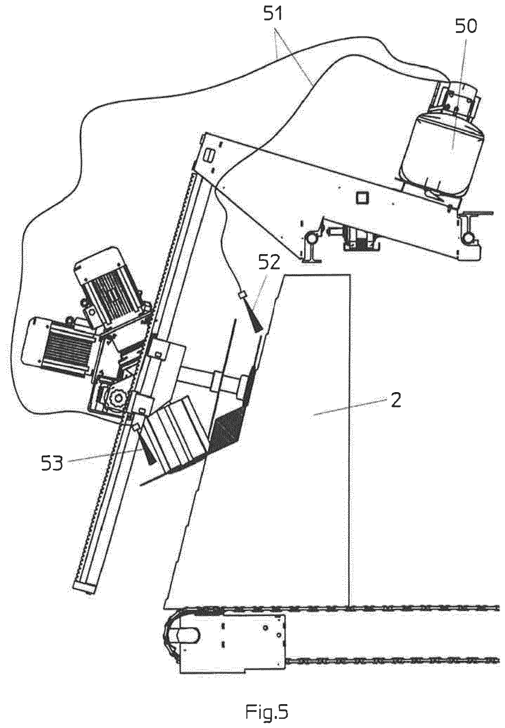

The drive shaft 26 of the upper rotary cutter blade 32 is provided with a disc 38 for guiding the feed that is separated. The disc 38 is substantially parallel and co-axial to the upper rotary cutter blade 32 and is circular having substantially the same diameter as the rotary cutter blade 32, for example. The distance between the disc 38 and the rotary cutter blade 32 is about the same as the thickness of the slice or strip of feed 40 to be cut, such as shown particularly in Figure 5.

The drive shaft 27 of the lower rotary cutter blade 33 is provided with a discharge member 39 rotating at the same time. This discharge member 39 consists of a substantially cylindrical drum 41 which is provided with radial vanes or profiles 42.

On top of the upper frame 23 is a water reservoir 50, as particularly shown in Figure 5. A feed line 51extends from the water reservoir 50 to a first wetting nozzle 52 arranged to wet the upper cutter blade 32, and a second wetting nozzle 53 arranged to wet the lower cutter blade 33. When activated the nozzles 52, 53 spray water over the respective cutter blades 32, 33 to clean them and to provide some lubricating effect to enable easier cutting against lower cost. A control unit (not shown) is programmed to activate the nozzles 52, 53, e.g., to spray about 1 - 6 cl of water over the part of the cutter blades that are in reach of the respective nozzle at the start of each horizontal stroke by the cutting unit.

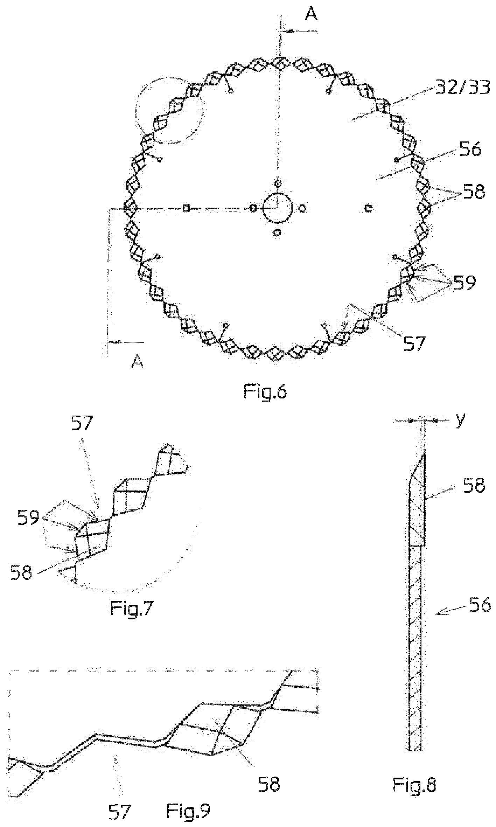

Figures 6 - 9 show a cutter blade 32, 33 that can be used as the upper and lower cutter blade of the apparatus 1 in Figure 1. The cutter blade 32, 33 comprises a substantially circular main disk 56, typically of a suitable steel type. The main disk 56 has a substantially circular outline with triangular recesses 57. Cutting teeth 58 of a metal type of particularly high hardness, such as cemented carbide, are attached to the main disk, e.g., soldered or welded, fitting into the triangular recesses 57. The cutting teeth 58 are symmetrical with a symmetry axis extending radially relative to the main disk 56. The cutting teeth 58 have a sharpened cutting edge 59 at their tops and at both sides projecting from the main disk 56. This way, it will be possible to cut fodder with both rotational cutting directions of the cutter blade 32, 33.

As shown in Figure 8, the cutting teeth 58 project from the back side of the cutter blade 56 facing the cutting face over a distance y. This allows easier sharpening or even self-sharpening by wearing away at the protruding side. In the exemplary embodiment in the drawing the tooth is sharpened at one side only. In an alternative embodiment, it may be sharpened symmetrically at both sides.

To separate feed from the block 2, the cutting unit 9 is moved horizontally along the cutting face. At the cutting point 37, the cutting teeth 58 of the upper cutter blade 32 move in the same direction as the cutting unit 9, while the cutting teeth of the lower blade 33 move in the opposite direction. Consequently, the two blades 32, 33 rotate in the same rotational directions. If the cutting unit 9 moves to the left, the two cutter blades 32, 33 rotate clockwise. If the cutting unit 9 moves to the right, the two cutter blades 32, 33 rotate counter clockwise.

The cutting unit 9 follows a zigzag pattern to move the cutting point 37 over the cutting face 31. In a first stroke the cutting unit 9 moves in a first horizontal direction. After the cutting point 37 reaches the end of the width of the cutting face 31, the cutting unit 9 is moved downward in a direction parallel to the inclined cutting face 31. The rotating direction of both cutter blades 32, 33 is reversed just before, during or just after the cutting unit 9 is moved down. The cutting unit 9 is then moved in a second horizontal direction opposite to the first horizontal direction until it reaches the end of the width of the cutting face 31 at the opposite side of the cutting face 31. This is repeated until the cutting unit 9 finalises the lowest stroke. The cutting unit 9 is then moved upwardly to a position just above the top surface of the block 2. The block 2 is then moved forward over a distance corresponding to the desired thickness of the strip of feed to be cut next. The cutting unit 9 is then moved to a start position where it starts its meandering path defining a new cutting face.

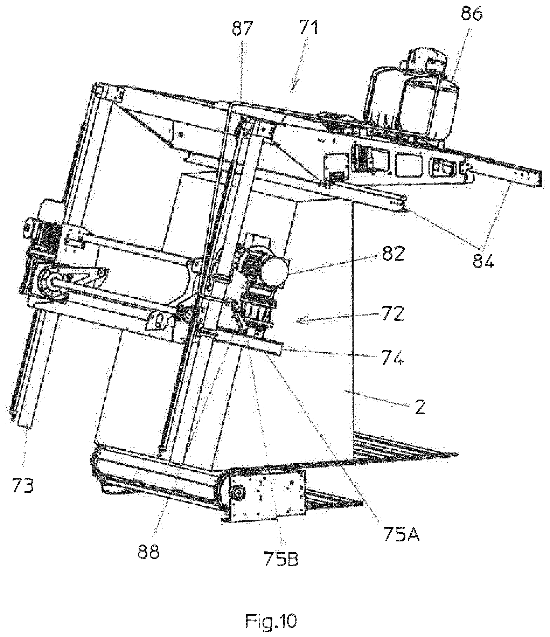

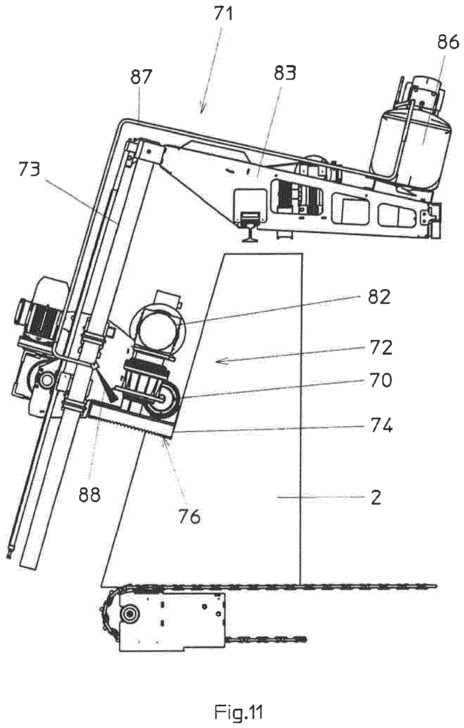

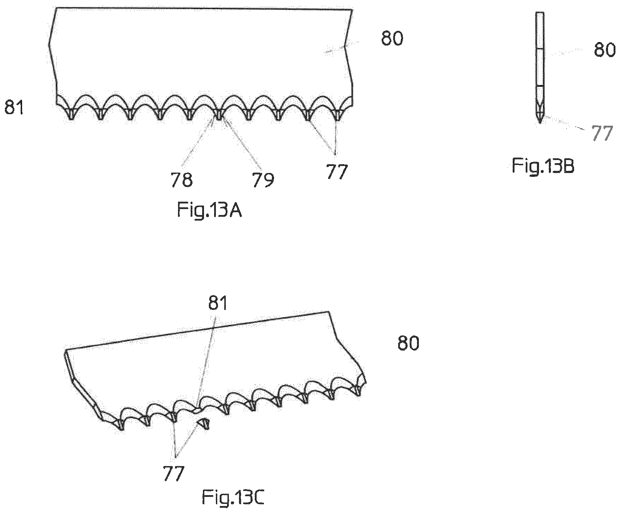

Figures 10 and 11 shows an alternative embodiment of the feed separating apparatus. The apparatus 71 comprises a cutting unit 72 which is moveable up and down along a guide 73 similar to the guide of the embodiment in Figure 1. The cutting unit 72 comprises a band knife 74 with an endless knife band having a lower edge 76 provided with symmetrical cutting teeth 77, shown in more detail in Figures 13A-C. Each of the teeth 77 has sharpened cutting edges 78, 79 at both sides. The teeth 77 are symmetrical in front view (Figure 13A) so they can cut in two opposite cutting directions with the same cutting efficiency. Optionally, the teeth 77 are also symmetrical in cross section (Figure 13B), although this is not essential

The teeth are hard metal cutting tips 77. The knife band 74 comprises a flexible steel band 80 with a teethed cutting edge with truncated prongs 81. The hard metal cutting tips 77 are soldered onto the truncated prongs 81.

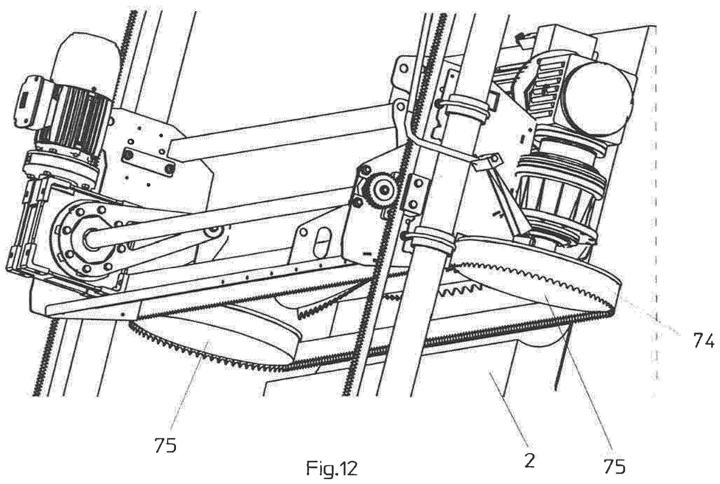

The endless knife band 74 is led along two turning wheels or pulleys 75 (see Figure 12), which are driven by an electromotor 82. The turning wheels have parallel rotational axes which are parallel to the guide 73, so the width of the band knife is essentially parallel to the cutting face. The drive pulley 75A has an edge 75B to support the band knife in a vertical plane when the band knife 74 is pushed down through the fodder.

When the band knife 74 is activated, the cutting unit 72 is gradually moved down via the guide 73. A discharge roller 70 is driven by driving means (not shown) to discharge the cut fodder towards a discharge conveyer (not shown). Since the guide 73 makes an angle with the vertical, the band knife 74 defines a backwardly inclined cutting face.

Since all cutting teeth 77 of the band knife 74 have two opposite cutting edges 78, 79 the cutting direction of the band knife 74 can be reversed. This may for example be done after the cutting edges 78, 79 of one side of the teeth 7 have become blunt, or it may take place after a predetermined number of cutting strokes, e.g., after each cutting stroke. In this respect a cutting stroke is the full path of the cutting unit from the top of the block 2 to the bottom level of the block 2.

The guide 73 hangs down from a top frame 83 which is movable along a pair of rails 84 between different parallel rows of blocks or bales 2. On top of the top frame 83 is a water reservoir 86. A feed line 87 extends from the water reservoir 86 to a wetting nozzle 88. Near one of the turning wheels the knife band 74 passes the operating range of the wetting nozzle 88. When activated the nozzle sprays, e.g., atomizes, water over the knife band 74 to clean it and to provide some lubricating effect to enable easier cutting against lower cost.

## Claims

1. An apparatus for separating feed for livestock along a cutting face, the apparatus being provided with a cutting unit (9, 72) comprising at least one knife (32, 33, 74) with cutting teeth (58, 77) having at least two cutting edges (59, 78, 79), and a drive (28, 29) configured to drive the knife in a continuous cutting motion parallel to the cutting plane, the apparatus being **characterised in that** the cutting edges of each cutting tooth are arranged to enable cutting in two opposite horizontal cutting directions, the drive being configured for driving the knife in a zigzag pattern along the cutting face or selectively in one of the two opposite cutting directions.

2. The apparatus of claim 1, wherein the knife comprises a main blade and cutting teeth (58) provided at a cutting edge of the main blade, wherein at least some of the cutting teeth are made of a harder material than the main blade.

3. The apparatus according to claim 1 or 2, wherein at least one knife is a band knife (74).

4. The apparatus of any preceding claim wherein the at least one knife includes a rotary cutter blade (12; 32, 33) .

5. The apparatus of any preceding claim, wherein the control unit is configured to reverse the cutting direction of the cutting blade when the moving direction of the cutting unit (9, 72) is reversed.

6. The apparatus according to any preceding claim, comprising at least one fluid supply with at least one nozzle (52, 53) directed to a cutting edge of the knife.

7. An apparatus according to one of the preceding claims, the drive comprising an electric motor (28, 29; 82).

8. Method of separating feed for livestock using the apparatus of claim 1, wherein a cutting unit (9, 72) is moved along a cutting face alternatingly in two opposite directions, the cutting unit comprising a knife, which is moved in a horizontal cutting direction, wherein the cutting direction of the knife is reversed when the moving direction of the cutting unit is reversed.

9. Method according to claim 8, wherein the cutting unit follows a zigzag pattern along the cutting face.

10. Method according to claim 9, using a rotational cutter blade (12; 32, 33).

11. Method according to any one of claims 8 - 10, wherein the knife is wetted during cutting.

12. Method according to claim 11, wherein the knife is wetted intermittently.

13. Method according to claim 11 or 12, wherein the knife is wetted with water containing additives, such as a lubricant, a solving aid for sugar components, a flavouring agent, a nutrient, an anti-corrosion agent, and/or an anti-freezing agent.

## Patentansprüche

1. Vorrichtung zur Trennung von Viehfutter entlang einer Schneidefläche, wobei die Vorrichtung mit einer Schneideeinheit (9, 72) ausgestattet ist, die mindestens ein Messer (32, 33, 74) mit Schneidezähnen (58, 77) mit mindestens zwei Schneidekanten (59, 78, 79) und einen Antrieb (28, 29) aufweist, der konfiguriert ist, das Messer in einer kontinuierlichen Schneidebewegung parallel zu der Schneideebene anzutreiben, wobei die Vorrichtung **dadurch gekennzeichnet ist, dass** die Schneidekanten jedes Schneidezahns angeordnet sind, um ein Schneiden in zwei entgegengesetzte horizontale Schneiderichtungen zu erlauben, wobei der Antrieb konfiguriert ist, das Messer in einem Zickzack-Muster entlang der Schneidefläche oder selektiv in eine der zwei entgegengesetzten Schneiderichtungen anzutreiben.

2. Vorrichtung nach Anspruch 1, wobei das Messer ein Hauptblatt und an einer Schneidekante des Hauptblatts bereitgestellte Schneidezähne (58) aufweist, wobei mindestens einige der Schneidezähne aus einem Material hergestellt sind, das härter als das des Hauptblatts ist.

3. Vorrichtung nach Anspruch 1 oder 2, wobei das mindestens eine Messer ein Bandmesser (74) ist.

4. Vorrichtung nach einem der vorstehenden Ansprüche, wobei das mindestens eine Messer ein Rotationsschneideblatt (12; 32, 33) aufweist.

5. Vorrichtung nach einem der vorstehenden Ansprüche, wobei die Steuereinheit konfiguriert ist, die Schneiderichtung des Schneideblatts umzukehren, wenn die Bewegungsrichtung der Schneideeinheit (9, 72) umgekehrt wird.

6. Vorrichtung nach einem der vorstehenden Ansprüche, aufweisend mindestens eine Fluidzufuhr mit mindestens einer Düse (52, 53), die zu einer Schneidekante des Messers gerichtet ist.

7. Vorrichtung nach einem der vorstehenden Ansprüche, wobei der Antrieb einen Elektromotor (28, 29; 82) aufweist.

8. Verfahren zur Trennung von Viehfutter unter Verwendung der Vorrichtung nach Anspruch 1, wobei eine Schneideeinheit (9, 72) entlang einer Schneidefläche abwechselnd in zwei entgegengesetzte Richtungen bewegt wird, wobei die Schneideeinheit ein Messer aufweist, das in einer horizontalen Schneiderichtung bewegt wird, wobei die Schneiderichtung des Schneideblatts umgekehrt wird, wenn die Bewegungsrichtung der Schneideeinheit umgekehrt wird.

9. Verfahren nach Anspruch 8, wobei die Schneideeinheit einem Zickzack-Muster entlang der Schneidefläche folgt.

10. Verfahren nach Anspruch 9, unter Verwendung eines Rotationsschneideblatts (12; 32, 33).

11. Verfahren nach einem der Ansprüche 8 bis 10, wobei das Messer während des Schneidens benetzt wird.

12. Verfahren nach Anspruch 11, wobei das Messer intermittierend benetzt wird.

13. Verfahren nach Anspruch 11 oder 12, wobei das Messer mit Wasser benetzt wird, das Zusatzmittel enthält, wie beispielsweise ein Schmiermittel, eine Lösungshilfe für Zuckerkomponenten, ein Geschmacksmittel, ein Nährmittel, ein Antikorrosionsmittel und/oder ein Frostschutzmittel.

## Revendications

1. Appareil pour séparer des aliments pour bétail le long d'une face de coupe, l'appareil étant pourvu d'une unité de coupe (9, 72) comprenant au moins un couteau (32, 33, 74) pourvu de dents coupantes (58, 77) ayant au moins deux bords coupants (59, 78, 79), et d'un élément d'entraînement (28, 29) configuré pour entraîner le couteau dans un mouvement de coupe continu parallèle au plan de coupe, l'appareil étant **caractérisé en ce que** les bords coupants de chaque dent coupante sont agencés pour permettre une coupe dans deux directions de coupe horizontale opposées, l'élément d'entraînement étant configuré pour entraîner le couteau en zigzag le long de la face de coupe ou sélectivement dans l'une des deux directions de coupe opposées.

2. Appareil selon la revendication 1, dans lequel le couteau comprend une lame principale et des dents coupantes (58) situées au niveau d'un bord coupant de la lame principale, dans lequel au moins certaines des dents coupantes sont composées d'un matériau plus dur que la lame principale.

3. Appareil selon la revendication 1 ou 2, dans lequel au moins un couteau est un couteau à ruban (74).

4. Appareil selon l'une quelconque des revendications précédentes dans lequel l'au moins un couteau inclut une lame coupante rotative (12 ; 32, 33).

5. Appareil selon l'une quelconque des revendications précédentes, dans lequel l'unité de commande est configurée pour inverser la direction de coupe de la lame coupante lorsque la direction de déplacement de l'unité de coupe (9, 72) est inversée.

6. Appareil selon l'une quelconque des revendications précédentes, comprenant au moins une alimentation en fluide avec au moins une buse (52, 53) dirigée vers un bord coupant du couteau.

7. Appareil selon l'une des revendications précédentes, l'élément d'entraînement comprenant un moteur électrique (28, 29 ; 82).

8. Procédé de séparation d'aliments pour bétail utilisant l'appareil selon la revendication 1, dans lequel une unité de coupe (9, 72) est déplacée le long d'une face de coupe en alternance dans deux directions opposées, l'unité de coupe comprenant un couteau, qui est déplacé dans une direction de coupe horizontale, dans lequel la direction de coupe du couteau est inversée lorsque la direction de déplacement de l'unité de coupe est inversée.

9. Procédé selon la revendication 8, dans lequel l'unité de coupe suit un motif en zigzag le long de la face de coupe.

10. Procédé selon la revendication 9, utilisant une lame coupante rotative (12 ; 32, 33).

11. Procédé selon l'une quelconque des revendications 8 à 10, dans lequel le couteau est humidifié pendant la coupe.

12. Procédé selon la revendication 11, dans lequel le couteau est humidifié par intermittence.

13. Procédé selon la revendication 11 ou 12, dans lequel le couteau est humidifié avec de l'eau contenant des additifs, tels qu'un lubrifiant, une aide à la solvatation pour composants de sucre, un agent aromatisant, un nutriment, un agent anticorrosion et/ou un agent antigel.
